# EUROPEAN PATENT SPECIFICATION

(11) **EP 3 769 036 B1**
(45) Date of publication and mention of the grant of the patent: **22.11.2023**
(21) Application number: 19772170.7
(22) Date of filing: 14.03.2019
(51) Int. Cl.: G01B 11/25, A01K 61/95, G01S 17/06

(54) **METHOD AND SYSTEM FOR EXTRACTION OF STATISTICAL SAMPLE OF MOVING FISH**
VERFAHREN UND SYSTEM ZUR EXTRAKTION EINER STATISTISCHEN STICHPROBE VON BEWEGLICHEN FISCHEN
PROCÉDÉ ET SYSTÈME D'EXTRACTION D'UN ÉCHANTILLON STATISTIQUE DE POISSONS EN MOUVEMENT

(30) Priority: 20.03.2018 US 201862645210 P
(43) Date of publication of application: 27.01.2021
(73) Proprietor: Giliocean Technology Ltd, 45815 Bnei Dror (IL)
(72) Inventor: SALEH, Ebraheem, 9084500 Abu Gosh (IL); TZIEGFINGER, Menachem, 9083600 Har-Adar (IL); BAR SHALOM, Abshalom, 30815 Kibbutz Nahsholim, Hof Charmel (IL); PELEG, Amitay, 3547000 Haifa (IL); SWIMIR, Ychiel, 45815 Bnai Dror (IL); MELCHER, Josef, 4580800 Tzur Itzchak (IL)
(74) Representative: Schulz Junghans Patentanwälte PartGmbB
(86) International application number: PCT/IL2019/050290
(87) International publication number: WO 2019/180698

(56) References cited:
- WO-A1-2009/008733
- WO-A1-2014/098614
- WO-A1-2017/001971
- WO-A1-2017/001971
- WO-A1-2017/204660
- GB-A- 2 539 495
- NO-B1- 330 423
- NO-B1- 332 103

## Description

### TECHNICAL FIELD

The present disclosure relates to extraction of statistical sample of population of moving fish in general. More specifically, the present disclosure relates to extraction of representative statistical sample of a population of moving fish by an imaging device and optical means.

### BACKGROUND

To control or manage a population of objects, measurement of the amount of the objects and their weight may be needed. Other measurements such as percentage of objects suffering from health issues out of the total amount of objects is also desired. When the population is of moving animals, the measurements may be a fundamental practice to provide an accurate daily amount of food or medication, track the growth rate of the animals and determine optimum time for harvest. However, measurements of animals while moving can be a complicated task. For that purpose, there are several methods known in the art.

An example of a population of moving objects may be fish. A common method to measure the amount and weight of fish is by randomly and manually plucking a couple of dozens of fish as a sample and then calculating the total weight of the fish in the sample. The average weight of the fish is calculated by dividing the total weight of the fish in the sample by the number of fish. However, because this sampling method is not convenient to conduct, it is performed only once in a couple of weeks under the assumption that growth rate between current sample and previous one is the same as the growth rate between previous sample and the one before. A deficiency of this method is that this assumption is wrong and it does not conform to modern agriculture, which aspires precision agriculture in which a constant and on-line monitoring is performed and facilitated by various sensors. Another method known in the art to measure fish is by streaming the fish via a pipe system. For example, in the method disclosed in US Patent US 20080137104 A1 "a method for recording and estimation of the weight of fish. A number of cameras, especially CCD-cameras, record pictures of fish moving by the cameras in a transfer conduit. The fish are illuminated from different sides in the transfer conduit and pictures of different parts of the fish are recorded by a sequence control, in such a way that a compound image recording is made, which is used as a base for an estimation of the weight of fish. A device to make measurements on fish 11, moving in a transfer conduit 12, that has at least two light sources 14 at the wall of the transfer conduit, for illumination of fish, and two or several cameras 10, especially CCD-cameras, arranged in a cross plane evenly around the circumferences, to record reflections from the fish or shadow pictures of the fish." However, a deficiency of this method is the requirement to either pass all the population of the fish via the pipe system or take a sample of the population hence risking in the possibility of receiving participation bias or non-response bias.

A method to sample a population of animals and extrapolating the result to the whole population is disclosed in Pentair website. "A frame is placed in each cage and the wireless radio link from the cage automatically transfers the data to a center base. All measurements are available in a web-based reporting application, which can automatically send daily detailed reports to selected recipients." According to this method the fish voluntarily pass through a data collecting frame. However, a deficiency of this method is that all fish presented on a screen are taken into account as part of the sample size, causing the sample size to be too large, thus making the sample not random enough, hence extrapolate less accurate measurements.

Yet another method to measure fish size, fish quantity and total fish biomass is disclosed in US 20060018197 A1. In the disclosed method "The fish are located in a seacage in a body of water. A mobile platform is placed on the surface water above the seacage and is moved in a transect pattern above the seacage. A transducer with associated transceiver attached to the mobile platform generates an echo pattern that is converted by a processor into estimates relating to fish size, fish quantity, and total fish biomass data of the fish located in the seacage." The deficiency of this method is that it measures, by acoustic resonance return, the mass of the whole fish population, and does not preform single fish measurements, thus making this method not accurate enough. For example, the method provides no specific or individual data in order to determine population distribution.

A method and system for calculating physical dimensions for freely movable objects in water is disclosed in PCT publication WO 2014/098614. In the disclosed method and system "calculating physical dimensions for freely movable objects in water, by illuminating the object or projecting a known or selected light pattern (13) on the object by means of at least one light source (10) at selected wavelength or wavelengths, recording illuminated object or objects with the projected light pattern (13) by means of recording means (11, 11a-b) in the form of at least one 2D camera provided with filters (12, 12a-b) arranged to only accept light having selected wavelengths or provided with image producing sensors arranged to only collect light with selected wavelengths, including generation of a 3D model based on recorded images and/or video from the recording means (11, 11a-b) as basis for calculating the physical dimensions."

An apparatus for improvement of time-of-flight cameras is disclosed in GB 2539495. In the disclosed apparatus "Time-of-Flight (ToF) cameras underwater is used for estimating position, number, depth, shape, size or mass of freely movable object, particularly underwater such as fish. The apparatus comprises a modulated electromagnetic (EM) radiation source configured to illuminate an object of interest and a 3D Time-of-Flight (ToF) camera comprising a matrix of pixels. The matrix of pixels is configured to gather reflected modulated EM radiation and a controller is configured to determine depth information from phase information of reflected EM radiation gathered by the matrix of pixels. The modulating EM radiation source comprises at least one wavelength component with a wavelength lower than that of visible red light. Also provide is similar apparatus in which the modulated radiation source is configured to emit sufficiently high intensity of radiation so that phase information relating to distance information is extractable in reflected radiation received by the camera."

A system and method for calculating the size of marine organisms in water, such as fish is disclosed in NO 332103 B1. In the disclosed system and method "for calculating the size of marine organisms in water, such as fish, comprising a housing with at least one camera, wherein the camera is adapted to take pictures down into the water of single fish, image analysis tools for analyzing images taken by the camera, as well as equipment to raise and lower the house in the water... by using high resolution still images in combination with laser instead of 3D video. The fish can be seen from above with artificial light instead of from below or from the side."

NO 330423 B1 discloses a device for determining a biomass of living fish in water by means of a stereoscopic camera. For this purpose, the size and shape of fish may be determined by the system.

All known prior art discloses systems and methods which require one or more imaging devices for image processing. There is a need for a method and system for statistical measurement of population of moving fish where the sample retrieved from the population is representative to extrapolate accurate results by using a simpler system and a system that is configured to generate a statistical sample based on criteria other than size.

### SUMMARY

There is thus provided, in accordance with some embodiments of the present disclosure, a simple system for accurately extracting a statistical sampling of population of moving objects According to some embodiments, the system comprises a single imaging device and a single light source pointer. According to the invention, the system comprises: a light source pointer; an imaging device; and a processor. The light source pointer is configured to project a light source to a predefined direction for point marking moving objects. The imaging device is configured to: (i) face the predefined direction; (ii) capture images to record moving objects that are marked by a light beam point by said light source; and (iii) send the images to the processor. The processor is configured to: (i) recognize images that include objects that are marked by a light beam point by the light source in a predefined range of angles; (ii) identify as relevant objects a predetermined size of statistical sample of objects from the recognized images based on machine learning process; and (iii) display a list of images of the identified relevant objects. The list of relevant objects provides a statistical sample of population of moving objects for statistical measurements, wherein said identified relevant fish are combined of one or more types of fish selected with criteria from a group consisting of: species, color, spots and flecks of the fish.

Furthermore, in accordance with some embodiments of the present disclosure, the processor is further configured to: (i) calculate distance between the imaging device and the relevant fish and calculate a shape of said relevant fish; and (ii) calculate a body area of the fish based on the calculated distance and shape of the fish. The processor may be further configured to calculate distance using a light beam point mark on the object.

There is further provided, in accordance with some embodiments of the present disclosure, the processor is further configured to display a distribution of the population when the identified relevant fishes are combined of one or more types of fish. The one or more types of fish are selected from a group consisting of: species, color, spots and flecks of the object.

Moreover, the machine learning process of the system is performed according to a provided parameter.

In some embodiments, the provided parameter is selected from a group consisting of: color, spots, flecks of the object, position in space and locomotion of the object.

Furthermore, the system may be located inside a closed area. Alternatively, the system may be located outside the closed area and directed to mark with a light source point the moving objects and capture an image to record potential relevant fishes for the statistical sample. Alternatively, the system may be located in a virtually marked area, which may designate an area that does not contain physical boundaries but instead the boundaries of the area are virtual, and their definition may change per user preferences.

There is further provided a method for extracting a statistical sample of population of moving fishes. The method comprising: (i) receiving a size of a statistical sample; (ii) determining criteria for machine learning process to identify objects as relevant objects; (iii) projecting a light beam to a predefined direction for point marking moving objects; (iv) facing an imaging device to the predefined direction to capture an image by the imaging device; (v) capturing an image to record light beam point marked moving objects; (vi) sending the image to a processor; (vii) recognizing images that include objects that are marked by the light source pointer in a predefined range of angles appropriate for image processing; (viii) identifying a fish marked by light beam point in the captured image as relevant fishes according to the determined criteria by the processor; and (ix) displaying a list of images of the identified relevant fishes having the received size of a statistical sample. The list of relevant fishes provides a statistical sample of population of moving fishes for statistical measurements.

According to the invention, the method further comprises the step of identifying relevant fish which are combined of one or more types of fish selected with criteria from a group consisting of: species, color, spots and flecks of the fish.

In accordance with some embodiments of the present disclosure, the method further comprising: (i) calculating distance between the imaging device and the relevant fishes; and (ii) calculating a body area of the fishes based on the calculated distance and a shape of the fish. The step of calculating distance and the step of calculating the body area may be performed by the processor. The calculating of distance may be carried out by using a light beam point mark on the fish.

Furthermore, the method may further comprise a step of displaying a distribution of the population by the processor.

In some embodiments, the machine learning process of the method is performed according to a provided parameter.

In some embodiments, the provided parameter is selected from a group consisting of: color, spots, flecks of the object, position in space and locomotion of the object.

### BRIEF DESCRIPTION OF THE DRAWINGS

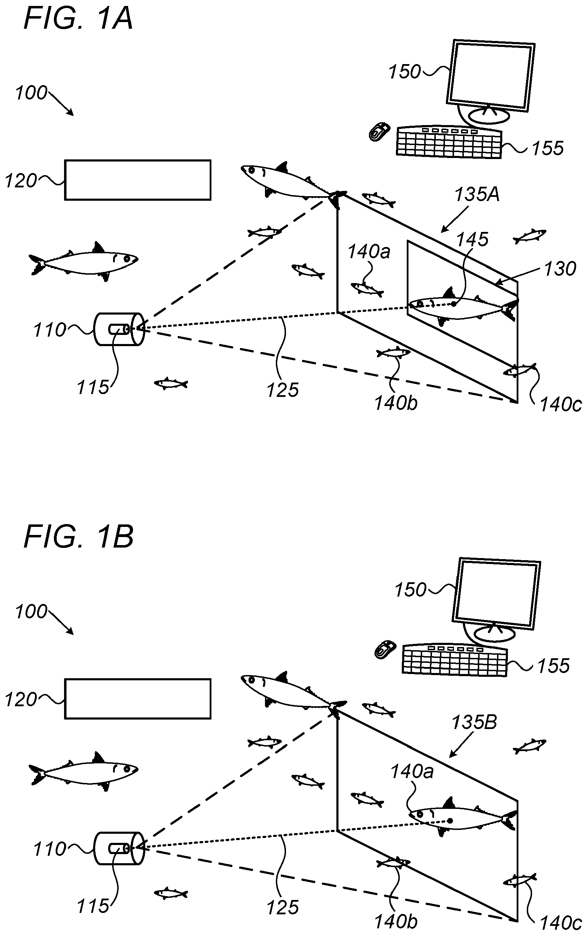

Some non-limiting exemplary embodiments or features of the disclosed subject matter are illustrated in the following drawings.
In the drawings: Figure 1A is a diagram schematically illustrating one form of a system for extracting a statistical sampling of population of moving fishes, where a light source point marks a relevant fish, according to one embodiment of the disclosure;
Figure 1B is a diagram schematically illustrating one form of a system for extracting a statistical sampling of population of moving fishes, where a light source does not point mark a fish, according to another embodiment of the disclosure;
Figure 1C is a diagram schematically illustrating one form of a system for extracting a statistical sampling of population of moving fishes, where a light source point marks a portion of a fish, according to yet another embodiment of the disclosure; and
Figure 2 is a schematic flow chart illustrating a method for extracting a statistical sampling of population of moving fishes, according to some embodiments of the present disclosure.

### DETAILED DESCRIPTION

In the following detailed description, numerous specific details are set forth in order to provide a thorough understanding of the disclosure. However, it will be understood by those of ordinary skill in the art that the disclosure may be practiced without these specific details. In other instances, well-known methods, procedures, components, modules, units and/or circuits have not been described in detail so as not to obscure the disclosure.

Although embodiments of the disclosure are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium (e.g., a memory) that may store instructions to perform operations and/or processes. Although embodiments of the disclosure are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. Unless explicitly stated, the method embodiments described herein are not constrained to a particular order or sequence. Additionally, some of the described method embodiments or elements thereof can occur or be performed simultaneously, at the same point in time, or concurrently. Unless otherwise indicated, use of the conjunction "or" as used herein is to be understood as inclusive (any or all of the stated options).

The term "mark" or "marked" or "point marked" in this description refers to mark which is not permanent on the object but as a point shape or a cross shape or any other shape of a light beam that is showing on an object.

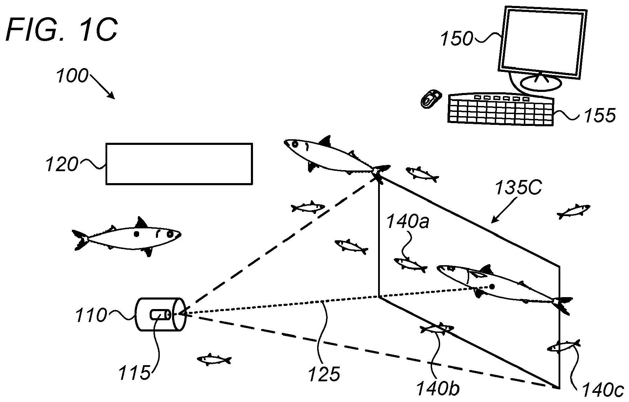

A system may be configured to extract a statistical sampling of population of moving fishes for statistical measurements. A statistical measurement may be, in a non-limiting example, the weight of the fishes. In the example of Fig. 1, such a system is shown. The system 100 includes a processor 120. For example, processor 120 may include one or more processing units, e.g., of one or more computers. Processor 120 may be configured to operate in accordance with programmed instructions stored in memory. Processor 120 may be capable of executing an application for identifying a predetermined amount of light beam marked moving fishes as relevant fishes in the captured images according to predefined criteria based on machine learning process and providing a list of images of the relevant fishes. The machine learning process may be performed according to a provided parameter. In some embodiments, the provided parameter may be selected from a group consisting of: color, spots, flecks of the object, position in space and locomotion of the fish.

Processor 120 may communicate with output device 150. For example, output device 150 may include a computer monitor or screen. Processor 120 may communicate with a screen of output device 150 to display the list of images of the relevant fish. In another example, output device 150 may include a printer, display panel, speaker, or another device capable of producing visible, audible, or tactile output. As such, output device 150 may deliver a printout of the list of images of the relevant fishes.

According to some embodiments of the present disclosure, processor 120 may communicate with input device 155. For example, input device 155 may include one or more of a keyboard, keypad, or pointing device for enabling a user to input data or instructions for operation of processor 120.

A user (not shown) may enter via input device 155 the size of the statistical sample, i.e., number of fishes that is required for the statistical sample, for example, the number of relevant fishes in the list of images.

The present disclosure will be described below in more details with reference to the attached drawings, where
Figure 1A is a diagram illustrating one form of a system for extracting a statistical sampling of population of moving objects, where a light source pointer marks a relevant object.

According to one embodiment of the present disclosure, a light source pointer 115, may project a static beam 125 in a parallel direction to the centerline of the imaging device field of view. An imaging device such as a camera 110 faces the same direction as the light source pointer 115 and captures an image 135A to record moving fishes point marked by the light source pointer 115. According to some embodiments of the disclosure, the light source pointer may be a laser beam pointer, a LED pointer or any type of other source of light.

The captured image 135 may include moving fishes such as fish 140a-c and light beam point marked object 130. The camera 110 may send the captured image 135A to the processor 120 for image processing.

In operation, the processor 120 may recognize the captured image 135A as having a fish that was point marked by the light source pointer 115 in a predefined range of angles of the fish relative to the light beam as appropriate for image processing. For example, 90 degrees between an object and the light beam 125 may be considered an appropriate angle for image processing, in case the body area of the object is to be calculated by image processing. Then, if the captured image 135A was recognized as appropriate for image processing, processor 120 may execute a method for identifying a fish as a relevant fish based on a machine learning process, thereafter. In case a fish was not point marked in the predefined range of angles, the processor 120 will not perform image processing as will be elaborated in detail with respect to Figure 1C.

It should be noted that different ranges of angles may be appropriate for different types of image processing. That is, in the example of image processing intended for calculating the weight of fishes, the predefined angle at which the object should be located with respect to imaging device 110, in order to measure body area of the fish, should be of substantially 90 degrees, such that substantially the entire body area of the fish is captured by the imaging device 110. However, in other cases, for example, when monitoring of a disease of the fishes, e.g., a skin disease, is required, other predefined angles or predefined range of angles may be suitable for detection of such diseases. In case a disease is to be monitored, the fish need not necessarily be positioned substantially perpendicularly to the light beam 125, but may rather be positioned in various other angles, as long as appearance of some of the fish's disorder may be noticed in an image captured by imaging device 110.

The fishes point marked by the light source pointer 115 and captured by the imaging device 110 are moving in different directions and not positioned in the same place at all times. Therefore, the combination of the random movement of the fishes and the static light beam and imaging device ensures that varied fishes are captured by the imaging device 110, thus, making the sample of relevant fishes random and proper for statistical measurements. According to some embodiments, a certain number of images is captured per second. For example, 30 images per second. Thus, a machine learning process may identify the locomotion of a fish, e.g., by comparing a certain number of consecutive images. According to some embodiments, to identify possible marine pollution causing fish illness, the locomotion of fish may be identified by the system 100, for example, based on a known fact that a sick fish tends to lay on its side.

According to some embodiments, the processor 120 may determine a shape of the relevant fish and the distance between the camera 110 and the identified moving fishes, e.g., fish t 130, by implementing an image processing method. According to some embodiments, the distance between camera 110 and the identified moving fishes may be calculated by using a light beam point mark 145 on the fish. In some embodiments, measurements of the distance between a relevant fish and the imaging device 110 may be based on distance between the fish and light source pointer 115, which may be calculated based on the light beam point mark 145 on the fish. However, in other embodiments, the distance between imaging device 110 and a relevant fish may be calculated using methods which exclude the use of the light beam point mark 145 on the fish. The processor 120 may also determine colors, spots, flecks, way of movement or lack of movement and position in space of the fishes in order to detect skin disease of the fishes. For example, a position in space may be a flapping fish, which might indicate that the fish is sick. In another example, some pattern or the mere presence of spots on the fish skin may indicate a skin disorder.

According to some embodiments, the system 100 may be located inside a closed area, for example, in the same closed area where the moving objects are located, or alternatively, the system 100 may be located outside a closed area and be directed to point mark the moving fishes and capture an image to record potential relevant fishes for the statistical sample. According to yet some other embodiments, the system 100 may be positioned in a virtually marked area.

Accordingly, based on the determined distance and shape of each fish, the weight of the fishes in the list of images of relevant fishes, may be calculated, as further elaborated in Frank S. Berent D., Weight estimation of flatfish by means of structured light and image analysis, Fisheries Research, Volume 11, Issue 2, April 1991, Pages 99-108. Thereby, the present disclosure may provide for example, a statistical sample of the weight of the fishes of the measured population.

Monitoring the effectiveness of the nutrition provided to animals is a necessary operation in controlling or managing a population of various types of animals. According to some embodiments, the relevant fishes that are to be sampled as part of the statistical measurements may be combined of one or more types of fishes. The one or more types of fishes are selected from a group consisting of: species, color, spots and flecks of the fish. For example, in case the fish residing in a fish pool, the relevant fishes may be combined of sea-bass and of trout (and/or any other types of fish that live in pools). The processor 120 may display on an output device 150 a distribution of the population of the fishes. In such case, the system 100 may provide a list of images of relevant fishes for each predefined types for statistical measurements. The statistical measurements may reveal that a growth rate of a weak population is lower than the growth rate of a stronger population, e.g., animals with higher weight, which may mean that the stronger population is growing on the expense of the weaker population. Correspondingly, a farmer who controls and manages the population of various types might seek for a solution such as separating the different types or increasing the accessibility of the food to the weaker population. In another example, the animals are fish of the same species where male fish are red colored and female fish are grey colored. In such case, the system 100 may provide a list of images of relevant objects for male and female according to their colors for statistical measurements. The statistical measurements track fish reproduction. In yet another example, the system 100 may operate to provide a list of images of relevant fishes where the relevant fishes have skin disease based on machine learning process.

Figure 1B is a diagram illustrating one form of a system for extracting a statistical sampling of population of moving fishes, where a light beam 125 projected by light source pointer 115 does not point mark a fish. According to some embodiments, in case the light beam 125 does not point mark any fishand the processor 120 receives such an image 135B the processor may discard the image 135B.

Figure 1C is a diagram illustrating one form of a system for extracting a statistical sampling of population of moving fishes, where a light beam point marks a portion of a fish.

According to some embodiments, when the processor 120 receives an image 135C where the light beam 125 point marks a fish 130 that is in a relative angle to the light beam that is not appropriate for image processing the processor may discard the image 135C. For example, when the system 100 is configured to identify a fish 130, and fish 130 is positioned at an angle substantially other than 90 degrees to the light beam 125, as illustrated in the image 135C, since the angle at which fish 130 is positioned with respect to light beam 125 is not appropriate for image processing of body area, image 135C may be discarded and not included in the process of statistical sampling. That is, in the example where body area of a fish, e.g., fish 130, should be measured via image processing in order to determine weight of the fish 130, an angle of substantially 90 degrees should be present between the fish 130 and the light beam 125, thus enabling imaging device 110 to capture substantially the entirety of the fish's body area. However, it should be noted that for image processing of other object characteristics, other angles or ranges of angles may be relevant.

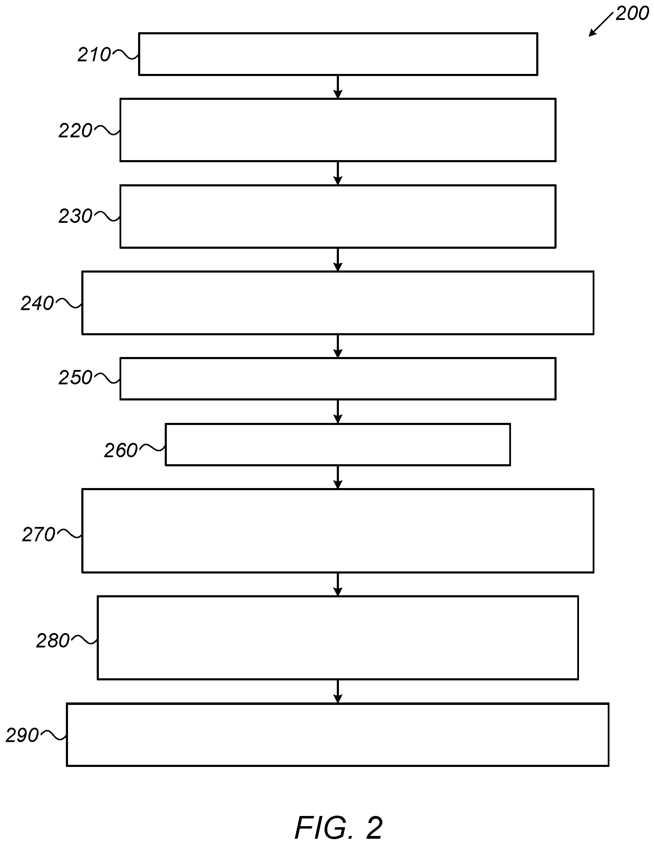

Figure 2 is a flowchart depicting a method for extracting a statistical sample of population of moving fishes. In the Example of Figure 2, a method 200 may be executed by a processor of a system for extracting a statistical sample of population of moving objects. The method 200 may be executed upon a request or command that is issued by a user, or automatically issued by another application. The method comprises operation 210, which includes receiving a size of a statistical sample from the input device 155. A statistical sample size according to the present disclosure, may comprise a number of images captured by the system 100 that match a predefined object, e.g., fish 130, which was point marked by the light beam 125. A statistical sample size may be of minimum thirty images. The size of one or more statistical samples may be predefined according to the amount of types of relevant obj ects. In some embodiments, operation 220 may comprise determining criteria for machine learning process to identify fishes as relevant fishes. In a non-limiting example, criteria for machine learning process may be color or shape of a fish, locomotion and position in space of the fish. The relevant fishes may be of one or more types, e.g., of one or more animal types. In some embodiments, the one or more types of fishes may be of different species, color, spots or flecks of the fish. In operation 230 a light beam is projected to a predefined direction for illuminating and point mark moving fishes. In the following operation 240, an imaging device is facing at the predefined direction to capture an image by the imaging device. In some embodiments, method 200 may comprise operation 250, in which an image is captured to record light beam point marked moving objects. In some embodiments, operation 260 may comprise sending the captured image to a processor, e.g. processor 120. Operation 270 may comprise recognizing images that include fishes that are point marked by the light source pointer in a predefined range of angles appropriate for image processing; Operation 280 may comprise identifying a fish point marked in the captured image as a relevant fish according to the determined criteria by the processor. according to some embodiments, method 200 may comprise operation 290, which may include displaying a list of images of the identified relevant fishes having the received size of a statistical sample. The list of relevant fishes provides a statistical sample of population of moving fishes for statistical measurements.

It should be understood with respect to any flowchart referenced herein that the division of the illustrated method into discrete operations represented by blocks of the flowchart has been selected for convenience and clarity only.

Similarly, it should be understood that, unless indicated otherwise, the illustrated order of execution of the operations represented by blocks of any flowchart referenced herein has been selected for convenience and clarity only.

Different embodiments are disclosed herein. Features of certain embodiments may be combined with features of other embodiments; thus, certain embodiments may be combinations of features of multiple embodiments. The foregoing description of the embodiments of the disclosure has been presented for the purposes of illustration and description. It is not intended to be exhaustive or to limit the disclosure to the precise form disclosed. It should be appreciated by persons skilled in the art that many modifications, variations, substitutions, and changes are possible in light of the above teaching. It is, therefore, to be understood that the appended claims are intended to cover all such modifications and changes.

## Claims

1. A system (100) for extracting a statistical sampling of population of moving fish, the system (100) comprising:
a light source pointer (115);
an imaging device (110); and
a processor (120),
wherein said light source pointer is configured to project a light source to a predefined direction for point marking moving fish;
said imaging device is configured to: (i) face said predefined direction; (ii) capture images to record moving fish that are point marked by said light source; and (iii) send said images to said processor (120);
wherein said processor (120) is configured to:
recognize images that include fish point marked by said light source pointer (115) in a predefined range of angles appropriate for image processing;
identify as relevant fish a predetermined size of statistical sample of fish from the recognized images based on a machine learning process; and
display a list of images of the identified relevant fish,
wherein the list of relevant fish provides a statistical sample of population of moving fish for statistical measurements,
wherein said identified relevant fish are combined of one or more types of fish selected with criteria from a group consisting of: fish of different species, fish of different color, fish of different spots, fish of different flecks.

2. The system of claim 1, wherein said processor (120) is further configured to: (i) calculate a distance between said imaging device (110) and said relevant fish and calculate a shape of said relevant fish; and (ii) calculate a body area of said fish based on said calculated distance and shape of said fish.

3. The system of claim 2, wherein said processor (120) is further configured to calculate the distance using a light source point mark on the fish.

4. The system of claim 1, wherein said processor (120) is further configured to display a distribution of the population.

5. The system of claim 1, wherein the machine learning process is performed according to a provided parameter.

6. The system of claim 5, wherein the provided parameter is selected from a group consisting of: color, spots, flecks of the fish, position in space and locomotion of the fish.

7. The system of claim 1, wherein the system is located inside a closed area or in a virtually marked area.

8. A method for extracting a statistical sample of population of moving fish, the method comprising:
receiving a size of a statistical sample;
determining criteria for machine learning process to identify fish as relevant fish;
projecting a light source to a predefined direction for point marking moving fish;
facing an imaging device (110) to the predefined direction to capture an image by the imaging device;
capturing an image to record point marked moving fish;
sending said image to a processor (120);
recognizing images that include fish point marked by said light source pointer in a predefined range of angles appropriate for image processing;
identifying fish point marked in the captured image as relevant fish according to said determined criteria by said processor; and
displaying a list of images of the identified relevant fish having the received size of a statistical sample,
wherein the list of relevant fish provides a statistical sample of population of moving fish for statistical measurements,
wherein the method further comprises the step of identifying relevant fish which are combined of one or more types of fish selected from a group consisting of: fish of different species, fish of different color, fish of different spots, fish of different flecks.

9. The method of claim 8, the method further comprising: (i) calculating distance between said imaging device and said relevant fish and calculating a shape of said relevant fish; and (ii) calculating a body area of said fish based on said calculated distance and shape of said fish, wherein the step of calculating distance and the step of calculating the body area are performed by said processor (120).

10. The method of claim 9, wherein the step of calculating the distance is carried out by using a light source point mark on the fish.

11. The method of claim 8, the method further comprising the step of displaying a distribution of the population by said processor (120).

12. The method of claim 8, wherein the machine learning process is performed according to a provided parameter.

13. The method of claim 12, wherein the provided parameter is selected from a group consisting of: color, spots, flecks of the fish, position in space and locomotion of the fish.

## Patentansprüche

1. Ein System (100) zum Extrahieren einer statistischen Stichprobe einer Population von sich bewegenden Fischen, das System (100) umfassend:
einen Lichtquellenzeiger (115);
eine Bildgebungsvorrichtung (110); und
einen Prozessor (120),
wobei besagter Lichtquellenzeiger dazu eingerichtet ist, eine Lichtquelle in eine vordefinierte Richtung zu projizieren, zum Punktmarkieren sich bewegender Fische;
wobei die besagte Bildgebungsvorrichtung dazu eingerichtet ist:
(i) besagter vordefinierter Richtung zugewandt zu sein;
(ii) Bilder zu erfassen, zum Aufnehmen sich bewegender Fische, die durch besagte Lichtquelle punktmarkiert sind; und
(iii) besagte Bilder an besagten Prozessor (120) zu senden;
wobei besagter Prozessor (120) dazu eingerichtet ist:
Bilder zu erkennen, die durch besagten Lichtquellenzeiger (115) punktmarkierte Fische in einem vordefinierten Bereich von für die Bildverarbeitung geeigneten Winkeln enthalten;
eine vorbestimmte Größe einer statistischen Stichprobe von Fischen aus den erkannten Bildern auf der Grundlage eines maschinellen Lernprozesses als relevante Fische zu identifizieren; und
eine Liste von Bildern von identifizierten relevanten Fischen anzuzeigen,
wobei die Liste von relevanten Fischen eine statistische Stichprobe der Population sich bewegender Fische für statistische Messungen bereitstellt,
wobei besagte identifizierte relevante Fische eine Kombination von einem oder mehreren Fischtypen sind, welche anhand von Kriterien aus einer Gruppe bestehend aus: Fischen verschiedener Arten, Fischen verschiedener Farbe, Fischen verschiedener Tupfen, Fischen mit verschiedenen Flecken, ausgewählt werden.

2. Das System nach Anspruch 1, wobei besagter Prozessor (120) weiterhin dazu eingerichtet ist: (i) einen Abstand zwischen besagter Bildgebungsvorrichtung (110) und besagten relevanten Fischen zu berechnen und eine Form besagter relevanten Fische zu berechnen; und (ii) eine Körperfläche besagter Fische basierend auf besagtem berechneten Abstand und Form besagter Fische zu berechnen.

3. Das System nach Anspruch 2, wobei besagter Prozessor (120) weiterhin dazu eingerichtet ist, den Abstand unter Verwendung einer Lichtquellenpunktmarkierung auf den Fischen zu berechnen.

4. Das System nach Anspruch 1, wobei der Prozessor (120) weiterhin dazu eingerichtet ist, eine Verteilung der Population anzuzeigen.

5. Das System nach Anspruch 1, wobei der maschinelle Lernprozess in Abhängigkeit von einem bereitgestellten Parameter durchgeführt wird.

6. Das System nach Anspruch 5, wobei der bereitgestellte Parameter ausgewählt ist aus der Gruppe bestehend aus: Farbe, Tupfen, Flecken der Fische, Position im Raum und Fortbewegung der Fische.

7. Das System nach Anspruch 1, wobei das System innerhalb eines geschlossenen Bereichs oder in einem virtuell markierten Bereich angeordnet ist.

8. Ein Verfahren zum Extrahieren einer statistischen Stichprobe einer Population von sich bewegenden Fischen, das Verfahren umfassend:
Erhalten einer Größe einer statistischen Stichprobe;
Bestimmen von Kriterien für einen maschinellen Lernprozess, um Fische als relevante Fische zu identifizieren;
Projizieren einer Lichtquelle in eine vordefinierte Richtung zum Punktmarkieren sich bewegender Fische;
Zuwenden einer Bildgebungsvorrichtung (110) in die vordefinierte Richtung, zum Erfassen eines Bildes durch die Bildgebungsvorrichtung;
Erfassen eines Bildes zum Aufnehmen von punktmarkierten sich bewegenden Fischen;
Senden besagten Bildes an einen Prozessor (120);
Erkennen von Bildern, die vom Lichtquellenzeiger punktmarkierte Fische in einem für die Bildverarbeitung geeigneten vordefinierten Bereich von Winkeln enthalten;
Identifizieren von punktmarkierten Fischen in dem erfassten Bild als relevante Fische gemäß besagten bestimmten Kriterien durch besagten Prozessor; und
Anzeigen einer Liste von Bildern der identifizierten relevanten Fische mit der erhaltenen Größe einer statistischen Stichprobe,
wobei die Liste von relevanten Fischen eine statistische Stichprobe der Population von sich bewegenden Fischen für statistische Messungen bereitstellt,
wobei das Verfahren weiterhin den Schritt des Identifizierens relevanter Fische umfasst, die eine Kombination von einem oder mehreren Fischtypen sind, welche anhand von Kriterien aus einer Gruppe bestehend aus: Fischen verschiedener Arten, Fischen verschiedener Farbe, Fischen verschiedener Tupfen, Fischen verschiedener Flecken, ausgewählt sind.

9. Das Verfahren nach Anspruch 8, das Verfahren weiterhin umfassend: (i) Berechnen des Abstands zwischen besagter Bildgebungsvorrichtung und besagten relevanten Fischen und Berechnen einer Form besagter relevanter Fische; und (ii) Berechnen einer Körperfläche besagter Fische basierend auf besagtem berechneten Abstand und Form besagter Fische, wobei der Schritt des Berechnens des Abstands und der Schritt des Berechnens der Körperfläche durch besagten Prozessor (120) durchgeführt werden.

10. Das Verfahren nach Anspruch 9, wobei der Schritt des Berechnens des Abstands unter Verwendung einer Lichtquellenpunktmarkierung auf den Fischen durchgeführt wird.

11. Das Verfahren nach Anspruch 8, das Verfahren weiterhin umfassend den Schritt des Anzeigens einer Verteilung der Population durch besagten Prozessor (120).

12. Das Verfahren nach Anspruch 8, wobei der maschinelle Lernprozess gemäß einem bereitgestellten Parameter durchgeführt wird.

13. Das Verfahren nach Anspruch 12, wobei der bereitgestellte Parameter ausgewählt ist aus einer Gruppe bestehend aus: Farbe, Tupfen, Flecken der Fische, Position im Raum und Fortbewegung des Fisches.

## Revendications

1. Système (100) d'extraction d'un échantillonnage statistique de population de poissons en mouvement, le système (100) comprenant :
un pointeur de source lumineuse (115) ;
un dispositif d'imagerie (110) ; et
un processeur (120),
dans lequel ledit pointeur de source lumineuse est configuré pour projeter une source lumineuse vers une direction prédéfinie pour marquer de points des poissons en mouvement ;
ledit dispositif d'imagerie est configuré pour : (i) être tourné vers ladite direction prédéfinie ; (ii) capturer des images pour enregistrer des poissons en mouvement qui sont marqués de points par ladite source lumineuse ; et (iii) envoyer lesdites images audit processeur (120) ;
dans lequel ledit processeur (120) est configuré pour :
reconnaître des images qui incluent des poissons marqués de points par ledit pointeur de source lumineuse (115) dans une gamme prédéfinie d'angles convenant au traitement d'images ;
identifier comme poissons pertinents une taille prédéterminée d'échantillon statistique de poissons à partir des images reconnues en fonction d'un processus d'apprentissage automatique ; et
afficher une liste d'images des poissons pertinents identifiés,
dans lequel la liste de poissons pertinents fournit un échantillon statistique de population de poissons en mouvement pour des mesures statistiques,
dans lequel lesdits poissons pertinents identifiés sont combinés d'un ou plusieurs types de poissons sélectionnés avec des critères parmi un groupe constitué de :
poissons de différentes espèces, poissons de différente couleur, poissons de différentes taches, poissons de différentes mouchetures.

2. Système selon la revendication 1, dans lequel ledit processeur (120) est en outre configuré pour : (i) calculer une distance entre ledit dispositif d'imagerie (110) et lesdits poissons pertinents, et calculer une forme desdits poissons pertinents ; et (ii) calculer une surface corporelle desdits poissons en fonction desdites distance et forme calculées desdits poissons.

3. Système selon la revendication 2, dans lequel ledit processeur (120) est en outre configuré pour calculer la distance en utilisant une marque de point de source lumineuse sur les poissons.

4. Système selon la revendication 1, dans lequel ledit processeur (120) est en outre configuré pour afficher une distribution de la population.

5. Système selon la revendication 1, dans lequel le processus d'apprentissage automatique est réalisé en fonction d'un paramètre fourni.

6. Système selon la revendication 5, dans lequel le paramètre fourni est sélectionné parmi un groupe constitué de : couleur, taches, mouchetures des poissons, position dans l'espace et locomotion des poissons.

7. Système selon la revendication 1, dans lequel le système est situé à l'intérieur d'une zone fermée ou dans une zone marquée virtuellement.

8. Procédé d'extraction d'un échantillon statistique de population de poissons en mouvement, le procédé comprenant :
recevoir une taille d'un échantillon statistique ;
déterminer des critères pour un processus d'apprentissage automatique pour identifier des poissons comme poissons pertinents ;
projeter une source lumineuse vers une direction prédéfinie pour marquer de points des poissons en mouvement ;
tourner un dispositif d'imagerie (110) vers la direction prédéfinie pour capturer une image par le dispositif d'imagerie ;
capturer une image pour enregistrer des poissons en mouvement marqués de points ;
envoyer ladite image à un processeur (120) ;
reconnaître des images qui incluent des poissons marqués de points par ledit pointeur de source lumineuse dans une gamme prédéfinie d'angles convenant au traitement d'images ;
identifier des poissons marqués de points dans l'image capturée comme poissons pertinents en fonction desdits critères déterminés par ledit processeur ; et
afficher une liste d'images des poissons pertinents identifiés ayant la taille reçue d'un échantillon statistique,
dans lequel la liste de poissons pertinents fournit un échantillon statistique de population de poissons en mouvement pour des mesures statistiques,
dans lequel le procédé comprend en outre l'étape d'identification de poissons pertinents qui sont combinés d'un ou plusieurs types de poissons sélectionnés parmi un groupe constitué de : poissons de différentes espèces, poissons de différente couleur, poissons de différentes taches, poissons de différentes mouchetures.

9. Procédé selon la revendication 8, le procédé comprenant en outre : (i) calculer une distance entre ledit dispositif d'imagerie et lesdits poissons pertinents, et calculer une forme desdits poissons pertinents ; et (ii) calculer une surface corporelle desdits poissons en fonction desdites distance et forme calculées desdits poissons, dans lequel l'étape de calcul de la distance et l'étape de calcul de la surface corporelle sont réalisées par ledit processeur (120).

10. Procédé selon la revendication 9, dans lequel l'étape de calcul de la distance est effectuée en utilisant une marque de point de source lumineuse sur les poissons.

11. Procédé selon la revendication 8, le procédé comprenant en outre l'étape d'affichage d'une distribution de la population par ledit processeur (120).

12. Procédé selon la revendication 8, dans lequel le processus d'apprentissage automatique est réalisé en fonction d'un paramètre fourni.

13. Procédé selon la revendication 12, dans lequel le paramètre fourni est sélectionné parmi un groupe constitué de : couleur, taches, mouchetures des poissons, position dans l'espace et locomotion des poissons.
